Europäisches Patentamt

European Patent Office

Office européen des brevets

(19)

(11) Veröffentlichungsnummer: **0 061 164**
**B1**

(12) **EUROPÄISCHE PATENTSCHRIFT**

(45) Veröffentlichungstag der Patentschrift: **12.11.86**

(51) Int. Cl.⁴: **G 01 F 11/26**

(21) Anmeldenummer: **82102249.8**

(22) Anmeldetag: **19.03.82**

(54) **Rohrförmige Dosiereinrichtung zur Abgabe von Flüssigkeitsmengen gleichen Volumens.**

(30) Priorität: **24.03.81 DE 3111503**
**19.12.81 DE 3150464**

(43) Veröffentlichungstag der Anmeldung:
**29.09.82 Patentblatt 82/39**

(45) Bekanntmachung des Hinweises auf die
Patenterteilung:
**12.11.86 Patentblatt 86/46**

(84) Benannte Vertragsstaaten:
**AT BE CH DE FR GB IT LI NL**

(56) Entgegenhaltungen:
**DE-B-1 202 672**
**FR-A-1 070 404**
**US-A-3 707 247**
**US-A-3 894 661**
**US-A-4 183 450**

(73) Patentinhaber: **Gottfried Roder Herstellung von
Kunststofferzeugnissen
Hochstrasse 86
D-2400 Lübeck (DE)**

(72) Erfinder: **Roder, Eberhard
Wilhelmstrasse 27
D-2407 Bad Schwartau (DE)**
Erfinder: **Düsing, Wolfgang
Am Struckteich 34
D-2401 Zarpen (DE)**

(74) Vertreter: **UEXKÜLL & STOLBERG
Patentanwälte
Beselerstrasse 4
D-2000 Hamburg 52 (DE)**

Courier Press, Leamington Spa, England.

**Beschreibung**

Die Erfindung bezieht sich auf eine rohrförmige Dosiereinrichtung zur Abgabe von Flüssigkeitsmengen gleichen Volumens aus Flüssigkeitsbehältern, die mit einer Abgabeöffnung versehen sind, in die die Dosiereinrichtung einsteckbar ist, so daß die Abgabeöffnung von der gegen die Behälterwandung abgedichteten Dosiereinrichtung verschlossen wird, mit einem sich in ihrem Inneren in axialer Richtung erstreckenden, zum bezüglich des Flüssigkeitsbehälters äußeren Ende offenen Ausgießkanal und einem sich in ihrem Inneren in axialer Richtung erstreckenden, zum äußeren Ende hin geschlossenen Dosierkanal, die durch eine Trennwand voneinander getrennt sind, die im Abstand von dem das innere Ende der Dosiereinrichtung verschließenden Boden endet, so daß zwischen dem Boden und dem Trennwandende ein den Dosierkanal und den Ausgießkanal verbindender Sammelraum gebildet wird, dessen Volumen mindestens gleich dem zu dosierenden Volumen ist, wobei der Dosierkanal über zwei in einem axialen Abstand entsprechend dem zu dosierenden Volumen angeordnete Öffnungen mit dem Behälterinnenraum verbunden ist und im Dosierkanal zwischen der am weitesten von seinem äußeren Ende entfernten Öffnung und dem Trennwandende ein Auffangraum gebildet ist, dessen Volumen mindestens gleich dem Volumen der Hälfte der maximal auftretenden freien Flüssigkeit ist.

Bei einer bekannten Dosiereinrichtung dieser Art (DE—PS 1 202 672) befinden sich die beiden den Dosierkanal mit dem Innenraum des Flüssigkeitsbehälters verbindenden Öffnungen in der Seitenwand der Dosiereinrichtung, und zwar die eine Öffnung direkt anschließend an der den Dosierkanal am äußeren Ende verschließenden Querwand und die andere Öffnung im entsprechenden axialen Abstand von der ersten Öffnung, so daß die beiden Öffnungen auf einer parallel zur Längsachse der Dosiereinrichtung verlaufenden Geraden liegen.

Wird der Flüssigkeitsbehälter, der mittels der bekannten Dosiereinrichtung verschlossen ist, auf den Kopf gestellt, so fließt Flüssigkeit aus dem Innenraum des Behälters durch die axial am weitesten außen liegende Öffnung in der Wandung des Dosierkanals in diesen hinein, bis der Flüssigkeitsstand im Dosierkanal so hoch angestiegen ist, daß er, bei auf dem Kopf stehenden Flüssigkeitsbehälter, die zweite Öffnung verschließt. In diesem Zustand kann keine Luft mehr in den Innenraum des Flüssigkeitsbehälters gelangen, und das abzugebende Flüssigkeitsvolumen ist erreicht.

Allerdings tritt auch nach Verschließen der zweiten Öffnung durch die Flüssigkeit noch weitere Flüssigkeit aus dem Innenraum des Flüssigkeitsbehälters in den Dosierkanal ein, nämlich die sogenannte freie Flüssigkeit. Dies ist diejenige Flüssigkeitsmenge, die aus dem Flüssigkeitsbehälter ausfließen würde, wenn man den Behälter öffnen, jedoch den Eintritt von Luft in den Behälterinnenraum verhindern würde. Die Menge dieser sogenannten freien Flüssigkeit hängt unter anderem vom spezifischen Gewicht der Flüssigkeit, der Höhe der Flüssigkeitssäule und von der Luftmenge im Flüssigkeitsbehälter ab, die durch das Austreten der freien Flüssigkeit expandiert und dann unter einem Unterdruck steht. Je nach Grad der Füllung des Flüssigkeitsbehälters ist somit die Menge an freier Flüssigkeit unterschiedlich groß, wobei diese freie Flüssigkeit nicht aus dem Dosierkanal abfließen kann, so daß tatsächlich nur die Hälfte der theoretisch möglichen Menge an freier Flüssigkeit in den Dosierkanal gelangt und dadurch die andere Hälfte im Innenraum des Flüssigkeitsbehälters zurückgehalten wird.

Die bei der bekannten Dosiereinrichtung über das gewünschte Volumen hinaus in den Dosierkanal austretende freie Flüssigkeit bewirkt, daß im Innenraum des Flüssigkeitsbehälters ein gewisser Unterdruck entsteht. Wird dann der Flüssigkeitsbehälter in seine Normallage zurückgekippt, so wird während dieses Vorganges infolge des Unterdrucks im Flüssigkeitsbehälter die in den Dosierkanal eingetretene freie Flüssigkeit durch die zweite Öffnung in der Wand des Dosierkanals wieder in den Innenraum des Behälters zurückgesaugt, während das durch den Abstand der beiden Öffnungen in der Wand des Dosierkanals bestimmte Flüssigkeitsvolumen in den Sammelraum zwischen Trennwandende und Boden der Dosiereinrichtung gelangt. Von hier aus kann die Flüssigkeit dann durch Kippen des Flüssigkeitsbehälters durch den Ausgießkanal hindurch abgegeben werden, und bei entsprechender Kippung wird dabei auch gleichzeitig ein neues Flüssigkeitsvolumen gewünschter Größe in den Dosierkanal eintreten.

Die bekannte Dosiereinrichtung hat den Nachteil verhältnismäßig großer Ungenauigkeit bei der Festlegung des abzugebenden Flüssigkeitsvolumens, weil der Flüssigkeitsstand im Dosierkanal dadurch unterschiedlich sein kann, daß der Benutzer den Flüssigkeitsbehälter zum Füllen des Dosierkanals in unterschiedliche Neigungslagen bringt, wobei das gewünschte Volumen genau erhalten wird, wenn der Flüssigkeitsbehälter derart auf den Kopf gestellt wird, daß die Längsachse des Dosierkanals in der Lotrechten verläuft. Weicht jedoch diese Achse von der Lotrechten ab, so ist das dosierte Flüssigkeitsvolumen entweder größer oder kleiner als gewünscht, weil die Flüssigkeit zwar beide Öffnungen in der Wand des Dosierkanals verschließt, jedoch der Flüssigkeitsspiegel entsprechend der Abweichung der Längsachse des Dosierkanals von der Lotrechten bezüglich der Längsachse geneigt ist. d.h. die sich durch die Neigung ergebende Abweichung des Flüssigkeitsspiegels von einer Ebene senkrecht zur Längsachse der Dosierkammer bewirkt eine Differenz des Flüssigkeitsvolumens vom an sich abzugebenden Volumen.

Es ist daher Aufgabe der Erfindung, die bekannte Dosiereinrichtung dahingehend zu verbessern, daß sie auch dann möglichst genau das vorbestimmte Flüssigkeitsvolumen abgibt, wenn der Benutzer den gekippten Flüssigkeitsbehälter zum Befüllen des Dosierkanals nicht exakt in die Lotrechte bringt.

Zur Lösung dieser Aufgabe wird eine Dosiereinrichtung der eingangs erwähnten Art erfindungsgemäß derart ausgestaltet, daß die am weitesten vom äußeren Ende entfernte Öffnung von der Mündungsöffnung eines sich durch die Bodenwand in den Dosierkanal erstreckenden Kanals gebildet ist, wobei die Mündungsöffnung vorzugsweise koaxial zur Längsachse des Dosierkanals angeordnet ist.

Dadurch daß die durch ihre Lage die Größe des abzugebenden Volumens bestimmende Öffnung im Dosierkanal sich erfindungsgemäß nicht mehr in der Seitenwand des Dosierkanals, sondern mehr in dessen Mitte, vorzugsweise auf dessen Längsachse befindet, wird bei einer Abweichung der Längsachse des Dosierkanals von der Lotrechten während des Befüllens des Dosierkanals wie bei der vorbekannten Dosiereinrichtung zwar ein von der senkrechten Ebene zur Längsachse des Dosierkanals abweichenden Flüssigkeitsspiegel auftreten, jedoch wird dieser Flüssigkeitsspiegel an einer Seite der Mündungsöffnung unterhalb und an der gegenüberliegenden Seite der Mündungsöffnung oberhalb von dieser liegen, d.h. der zu niedrige und der zu hohe Füllstand bezüglich der Mündungsöffnung kompensieren sich, und zwar insbesondere dann, wenn die Mündungsöffnung koaxial zur Längsachse des Dosierkanals angeordnet ist, wobei der Dosierkanal beispielsweise einen kreisförmigen Querschnitt hat. Auf diese Weise werden die bei der bekannten Dosiereinrichtung unvermeidbaren Abweichungen vom vorgegebenen Flüssigkeitsvolumen durch die erfindungsgemäße Dosiereinrichtung auf einfachste Weise vermieden.

Um einen möglichst einfachen Aufbau der Dosiereinrichtung zu erhalten, kann die Wandung des Kanals einstückig mit der Bodenwand ausgebildet sein.

Die Mündungsöffnung des Kanals sollte für eine Flüssigkeit bestimmter Viskosität möglichst klein sein, damit beim Transport der Flüssigkeit aus dem Dosierkanal in den Sammelraum zwar die sogenannte freie Flüssigkeit in den Innenraum des Flüssigkeitsbehälters zurückgesaugt wird, jedoch keine sonstige Flüssigkeit in den Behälterinnenraum gelangt, und damit die Abweichung von der Größe des an sich abzugebenden Flüssigkeitsvolumens bei Neigung bezüglich der Lotrechten möglichst gering ist. Vorzugsweise verjüngt sich der Kanal zur Mündungsöffnung hin, so daß bei Herstellung im Spritzgußverfahren eine einfache Entformung möglich ist.

Es hat sich gezeigt, daß bei leicht verformbarer Behälterwand, also beispielsweise bei Kunststoff-Flaschen, und/oder bei einer auszugießenden Flüssigkeit mit einer Viskosität, die größer ist als die Viskosität von Wasser, die erfindungsgemäße Dosiereinrichtung nicht immer zuverlässig arbeitet bzw. eine verhältnismäßig große Zeitspanne benötigt wird, um den Dosierkanal bis zur gewünschten Höhe zu füllen.

Zur Beseitigung dieser Schwierigkeiten kann die der Mündungsöffnung gegenüberliegende Eintrittsöffnung des Kanals einen Durchmesser haben, der 1/2 bis 1/5, vorzugsweise 1/3 bis 1/4 des Durchmessers des an die Eintrittsöffnung anschließenden Bereichs des Kanals beträgt.

Damit sich bei einer derartigen Ausbildung die Luftblasen im Bereich der Mittelöffnung beim Befüllen des Dosierkanals leicht ablösen, kann die außerhalb des Kanals befindliche Fläche des die Eintrittsöffnung aufweisenden Wandbereichs in der gleichen Ebene wie die der Mündungsöffnung abgewandte Fläche der Bodenwand liegen oder einen größeren Abstand von der Mündungsöffnung haben als diese Fläche der Bodenwand.

Um zu verhindern, daß die Flüssigkeit beim Ausgießen aus dem Sammelraum in den Dosierkanal zurückströmt, also nicht die gesamte portionierte Flüssigkeit aus der Flasche abgegeben wird, kann das innere Ende der den Dosierkanal umgebenden Wandung zum Kanal hin eingezogen sein, d.h. die Verbindungsöffnung zwischen Dosierkanal und Sammelraum kann einen gegenüber dem Querschnitt dieser beiden Bereiche verringerten Öffnungsquerschnitt haben.

Soll eine Flüssigkeit portioniert werden, deren Viskosität größer ist als die von Wasser, so kann es zweckmäßig sein, zwischen der Mündungsöffnung und dem inneren Ende der den Dosierkanal umgebenden Wandung in dieser Belüftungsöffnungen vorzusehen. Durch diese Belüftungsöffnungen kann beim Befüllen des Sammelraums aus dem Dosierkanal Luft hindurchtreten, für deren Durchtritt die Abmessungen des Ringraums zwischen innerem Ende der den Dosierkanal umgebenden Wandung und der Wand des Kanals nicht ausreichen.

Damit die Flüssigkeit aus dem Behälterinnenraum auch dann ohne Schwierigkeiten in den Dosierkanal eintreten kann, wenn nur noch verhältnismäßig wenig Flüssigkeit im Behälter vorhanden ist, können mehrere am Umfang des Dosierkanals verteilte, seinem äußeren Ende benachbarte Öffnungen vorgesehen sein.

Die Erfindung wird im folgenden anhand der Ausführungsbeispiele zeigenden Figuren näher erläutert.

Figur 1 zeigt einen vertikalen Schnitt durch eine in eine teilweise dargestellte Flasche eingesetzte Dosiereinrichtung.

Figur 2 zeigt eine Ansicht der Dosiereinrichtung gemäß Figur 1 von oben.

Figur 3 zeigt einen Schnitt durch die Dosiereinrichtung entlang der Linie III—III aus Figur 1.

Figur 4 zeigt in einer Darstellung entsprechend Figur 1 ein abgewandeltes Ausführungsbeispiel einer Dosiereinrichtung.

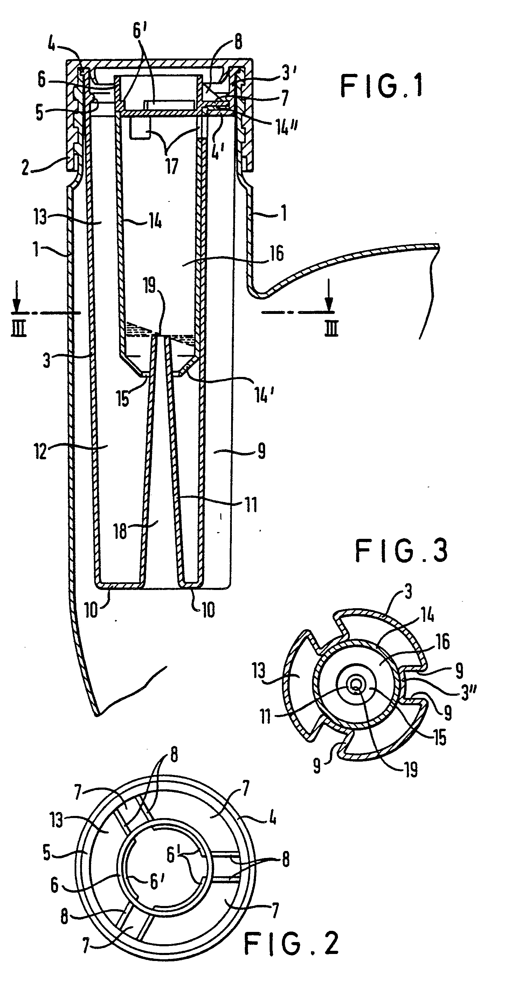

Die dargestellte Dosiereinrichtung hat einen rohrförmigen Außenkörper 3, der in den Hals einer Flasche 1 eingedrückt ist, so daß der äußere Endbereich 3' des Außenkörpers 3 dichtend an der Innenwand des Halses anliegt, während eine an diesen Endbereich anschließende, nach außen gerichtete Ringschulter 4 ein zu weites Einpressen der Dosiereinrichtung in die Flasche 1 verhindert. Die Flasche 1 ist in der Darstellung gemäß Figur 1 mit einem Schraubdeckel 2 verschlossen, der jedoch zur Benutzung der Dosiereinrichtung abgenommen wird.

In den Außenkörper 3 ist mittig ein rohrförmiger, einen kreisförmigen Querschnitt aufweisender Innenkörper 14 eingesetzt, der eine nach außen gerichtete, nur im Bereich des später zu beschreibenden Ausgießkanals 13 unterbrochene Ringschulter 14″ hat, die auf einer nach innen gerichteten, nur im Bereich des zu beschreibenden Dosierkanals 13 unterbrochenen Ringschulter 4′ des Außenkörpers 3 aufliegt, wodurch die axiale Stellung des Innenkörpers 14 bezüglich des Außenkörpers 3 bestimmt ist. In radialer Richtung wird der Innenkörper 14 durch Berührung mit dem Außenkörper 3 gehalten, dessen Umfangswand zwischen den radial verlaufenden Übergangsbereichen 9 radial nach innen versetzt ist und Anlagebereiche 3″ bildet (Figur 3), die in Eingriff mit der Außenfläche des Innenkörpers 14 stehen und diesen in seiner koaxialen Lage bezüglich des Außenkörpers 3 halten.

Die Umfangswand des Außenkörpers 3 geht am inneren Ende in eine Bodenwand 10 über, von der aus sich ein kegelstumpfförmiger Wandabschnitt 11 koaxial zur Längsachse von Außenkörper 3 und Innenkörper 14 in Richtung der Flaschenöffnung bzw. des äußeren Endes der Dosiereinrichtung erstreckt und im Inneren des Innenkörpers 14 endet. Der Wandabschnitt 11 bildet in seinem Inneren einen Kanal 18, der an seinem im Innenkörper 14 befindlichen Ende eine Mündungsöffnung 19 aufweist und den Innenraum der Flasche 1 mit dem Innenraum des Innenkörpers 14 verbindet. Der innere Endbereich 14′ des Innenkörpers 14 verläuft kegelstumpfförmig, so daß am inneren Ende des Innenkörpers 14 ein den Wandabschnitt 11 umgebender Ringraum 15 gebildet ist.

Wie in den Figuren 1 und 2 dargestellt, ist in das äußere Ende des Innenkörpers 14 ein Dichtungsstopfen 6 eingesetzt, der mit einer nur im Bereich des zu beschreibenden Ausgießkanals 13 unterbrochenen, nach außen gerichteten Ringschulter 7 auf der Ringschulter 14″ und hinter einer nach innen gerichteten Ringrippe 5 des äußeren Endbereiches 3′ des Außenkörpers 3 liegt und so in seiner Lage gehalten wird. Der Stopfen 6 ist durch radial verlaufende Verstärkungsrippen 8 und in Umfangsrichtung verlaufende Verstärkungsbereiche 6′ so ausgebildet, daß er sich nicht verformt, sondern die gesamte Dosiereinrichtung, ausgenommen den zu beschreibenden Dosierkanal 13, am äußeren Ende zuverlässig abdichtet.

Benachbart zum Stopfen 6 sind in den Wandungen von Außenkörper 3 und Innenkörper 14 fluchtende Öffnungen 17 vorgesehen, die den Innenraum der Flasche 1 mit dem Inneren des Innenkörpers 14 verbinden. Es sind drei Öffnungen 17 vorhanden, die gleichmäßig am Umfang verteilt sind und in Umfangsrichtung jeweils an der gleichen Stelle liegen wie die Anlagebereiche 3″ (Figur 3).

Der Innenraum des Innenkörpers 14 bildet einen Dosierkanal 16, und wenn die Flasche 1 zur Befüllung dieses Dosierkanals bei abgeschrauben Schraubdeckel 2 umgedreht wird, strömt Flüssigkeit durch die Öffnungen 17 des Dosierkanals 16 in diesen, bis der Flüssigkeitsstand die koaxial zum Dosierkanal 16 angeordnete Mündungsöffnung 19 erreicht und diese verschließt. Bei verschlossener Mündungsöffnung 19 kann keine Luft mehr in den Innenraum der Flasche 1 gelangen, und es fließt lediglich noch die sogenannte freie Flüssigkeit durch die Öffnungen 17 in den Dosierkanal 16, die den Flüssigkeitsstand derart anhebt, daß er sich in einem Bereich zwischen Mündungsöffnung 19 und Ringöffnung 15 befindet. Das Volumen dieses Bereiches muß selbstverständlich so gewählt werden, daß er diese freie Flüssigkeitsmenge aufnimmt, wobei es sich um die Hälfte der theoretisch austretenden freien Flüssigkeitsmenge handelt, die dann austreten würde, wenn die freie Flüssigkeit ohne Behinderung abfließen könnte.

Nach dem Befüllen des Dosierkanals 16 wird die Flasche 1 wieder in die in Figur 1 gezeigte Lage zurückgedreht, und die Flüssigkeit aus dem Dosierkanal 16 fließt durch den Ringraum 15 in den Sammelraum 12, und zwar fließt das Flüssigkeitsvolumen in diesen Sammelraum, das sich zwischen der Innenfläche des Stopfens 6 bzw. dem äußeren Ende der Öffnungen 17 und der Mündungsöffnung 19 angesammelt hatte, während die zwischen Mündungsöffnung 19 und ringraum 15 befindliche Menge an freier Flüssigkeit infolge der Unterdrucks im Innenraum der Flasche 1 durch die Mündungsöffnung 19 wieder in diesen Innenraum zurückgesaugt wird. Das so reproduzierbar bestimmte Flüssigkeitsvolumen, das sich im Sammelraum 12 befindet, kann dann durch erneutes Kippen der Flasche 1 durch den nach außen hin offenen Ausgießkanal 13, der, wie insbesondere Figur 3 zu entnehmen ist, von der Wand des Innenkörpers 14, einem Abschnitt der Umfangswand des Außenkörpers 3 und an diesen anschließende Übergangsbereiche 9 begrenzt wird, abgegeben werden. Bei diesem Kippen der Flasche füllt sich bereits wieder der Dosierkanal 16 durch die Öffnungen 17, so daß während des Ausgießvorganges erneut ein vorbestimmtes Flüssigkeitsvolumen in den Dosierkanal gebracht wird.

Durch die mittige Lage der Mündungsöffnung 19 bezüglich des Dosierkanals 16 wird erreicht, daß bei Abweichung der Längsachse des Dosierkanals 16 von der Lotrechten während des Befüllens dieses Kanals keine nennenswerte Abweichung des aufgenommenen Volumens von dem vorbestimmten Volumen eintritt. Wie in Figur 1 angedeutet, weicht nämlich der sich dann ergebende, gestrichelt dargestellte Flüssigkeitsstand von dem strichpunktiert gezeigten Flüssigkeitsstand bei lotrechter Lage des Dosierkanals 16 derart ab, daß auf einer Seite mehr und auf der anderen Seite weniger Flüssigkeit vorhanden ist, also die Abweichungen der beiden Seiten sich kompensieren. Diese Kompensation wird um so genauer eintreten, je kleiner die Mündungsöffnung 19 ist, weil dann der gestrichelt gezeigte Flüssigkeitsstand, der ja die gesamte Mündungsöffnung 19 verschließt, in sehr geringem Abstand vom Mittelpunkt der Mündungsöffnung 19 verläuft.

Es sei ferner erwähnt, daß durch die Verteilung der Öffnungen 17 am Umfang von Außenkörper 3 und Innenkörper 14 auch dann noch ein zuverlässiges Dosieren erreicht wird, wenn nur noch verhältnismäßig wenig Flüssigkeit in der Flasche vorhanden ist, und daß die Verteilung der Öffnungen 17 es auch überflüssig macht, die Flasche entlang einer vorgegebenen Ebene zu kippen, wie dies erforderlich wäre, wenn nur eine einzige Öffnung 17 vorgesehen ist.

Wie dargestellt, besteht die Dosiereinrichtung lediglich aus drei einzelnen Teilen, dem Außenkörper 3, dem Innenkörper 14 und dem Stopfen 6, die sich alle sehr einfach im Spritzgußverfahren aus Kunststoff, etwa Polypropylen, herstellen lassen und zur Montage lediglich zusammengedrückt und dann in die Flasche gepreßt zu werden brauchen.

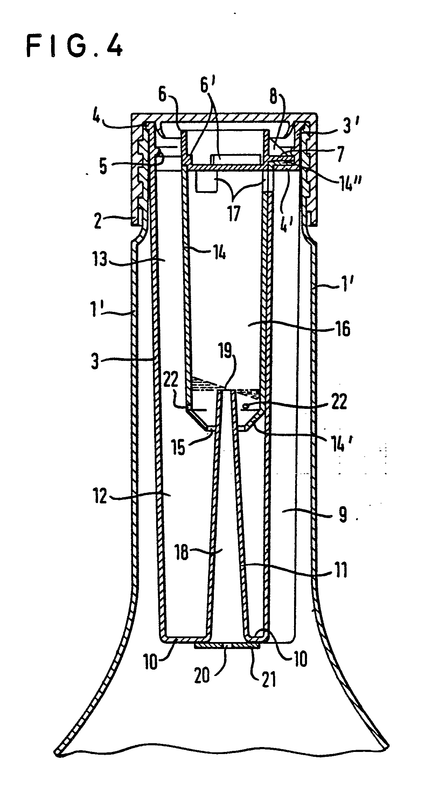

Die in Figur 4 gezeigte Dosiereinrichtung entspricht in ihrem wesentlichen Aufbau der Dosiereinrichtung gemäß Figuren 1 bis 3, und übereinstimmende Teile sind daher mit gleichen Bezugszeichen bezeichnet. Diese Dosiereinrichtung ist in eine Flasche 1' mit länglichem Hals eingesetzt, beispielsweise eine Kunststoff-Flasche mit verhältnismäßig leicht verformbaren Wänden.

Abweichend von der Dosiereinrichtung gemäß Figuren 1 bis 3 ist bei dieser Dosiereinrichtung das in der Figur untere Ende des Kanals 18 mit einer Platte 21 verschlossen, die an der unteren Fläche der Wand 10, etwa durch Schweißung oder Klebung befestigt ist. In dieser Platte befindet sich koaxial bezüglich des Kanals 18 eine Eintrittsöffnung 20, deren Durchmesser etwa 1/4 des Durchmessers des an die Platte anschließenden Bereichs des Kanals 18 beträgt, wobei dieser Bereich in der Zeichnung hinter der Eingangskrümmung des Kanals 18 beginnt.

Diese verengte Eintrittsöffnung 20 des Kanals 18 beschleunigt, wie vorstehend bereits erwähnt, das Befüllen des Dosierkanals 16 bei der Verwendung der Dosiereinrichtung in leicht verformbaren Behältern und/oder beim Dosieren von Flüssigkeiten, deren Viskosität größer ist als die von Wasser.

Infolge der über die Bodenwand 10 vorstehenden Anordnung der Platte 21 können sich zwischen dieser Platte und der Bodenwand im Bereich der Eintrittsöffnung 20 keine Luftblasen festsetzen, die das Befüllen des Dosierkanals behindern könnten.

Eine weitere Abweichung der Dosiereinrichtung gemäß Figur 4 gegenüber der Dosiereinrichtung gemäß Figuren 1 bis 3 besteht darin, daß in der Wandung 14 im Bereich zwischen der Mündungsöffnung 19 des Kanals 18 und dem Ringraum 15 kleine Belüftungsöffnungen 22 vorgesehen sind. Diese Belüftungsöffnungen erleichtern beim Ausströmen einer Flüssigkeit, deren Viskosität größer ist als die von Wasser, aus dem Dosierkanal 16 in den Sammelraum 12 den Eintritt von Luft in den Dosierkanal 16. Dadurch wird das Entleeren des Dosierkanals beschleunigt, während beim Fehlen dieser Belüftungsöffnungen infolge der Viskosität der Flüssigkeit gegebenenfalls die Luft nicht schnell genug durch den Ringraum 15 hindurchtreten könnte.

**Patentansprüche**

1. Rohrförmige Dosiereinrichtung zur Abgabe von Flüssigkeitsmengen gleichen Volumens aus Flüssigkeitsbehältern (1, 1'), die mit einer Abgabeöffnung versehen sind, in die die Dosiereinrichtung einsteckbar ist, so daß die Abgabeöffnung von der gegen die Behälterwand abgedichteten Dosiereinrichtung verschlossen wird, mit einem sich in ihrem Inneren in axialer Richtung erstreckenden, zum bezüglich des Flüssigkeitsbehälters (1, 1') äußeren Ende hin offenen Ausgießkanal (13) und einem sich in ihrem Inneren in axialer Richtung erstreckenden, zum äußeren Ende hin geschlossenen Dosierkanal (16), die durch eine Trennwand (14) voneinander getrennt sind, die im Abstand von dem das innere Ende der Dosiereinrichtung verschließenden Bodenwand (10) endet, so daß zwischen dem Boden und dem Trennwandende ein den Dosierkanal (16) und den Ausgießkanal (13) verbindender Sammelraum (12) gebildet wird, dessen Volumen mindestens gleich dem zu dosierenden Volumen ist, wobei der Dosierkanal (16) über zwei in einem axialen Abstand entsprechend dem zu dosierenden Volumen angeordnete Öffnungen (17, 19) mit dem Behälterinnenraum verbunden ist und im Dosierkanal (16) zwischen der am weitesten von seinem äußeren Ende entfernten Öffnung (19) und dem Trennwandende ein Auffangraum gebildet ist, dessen Volumen mindestens gleich dem Volumen der Hälfte der maximal auftretenden freien Flüssigkeit ist, dadurch gekennzeichnet, daß die am weitesten vom äußeren Ende entfernte Öffnung von der Mündungsöffnung (19) eines sich durch die Bodenwand (10) in den Dosierkanal (16) erstreckenden Kanals (18) gebildet ist.

2. Dosiereinrichtung nach Anspruch 1, dadurch gekennzeichnet, daß die Wandung (11) des Kanals (18) einstückig mit der Bodenwand (10) ausgebildet ist.

3. Dosiereinrichtung nach Anspruch 1 oder 2, dadurch gekennzeichnet, daß die Mündungsöffnung (19) koaxial zur Längsachse des Dosierkanals (16) angeordnet ist.

4. Dosiereinrichtung nach einem der Ansprüche 1 bis 3, dadurch gekennzeichnet, daß sich der Kanal (18) zur Mündungsöffnung (19) hin verjüngt.

5. Dosiereinrichtung nach einem der Ansprüche 1 bis 4, dadurch gekennzeichnet, daß die der Mündungsöffnung (19) gegenüberliegende Eintrittsöffnung (20) des Kanals (18) einen Durchmesser hat, der 1/2 bis 1/5, vorzugsweise 1/3 bis 1/4 des Durchmessers des an die Eintrittsöffnung (20) anschließenden Bereichs des Kanals (18) beträgt.

6. Dosiereinrichtung nach Anspruch 5, dadurch gekennzeichnet, daß die außerhalb des Kanals (18) befindliche Fläche des die Eintrittsöffnung (20) aufweisenden Wandbereichs (21) in der gleichen Ebene wie die der Mündungsöffnung (19) abgewandte Fläche der Bodenwand (10) liegt oder einen größeren Abstand von der Mündungsöffnung (19) hat als diese Fläche der Bodenwand (10).

7. Dosiereinrichtung nach einem der Ansprüche 1 bis 6, dadurch gekennzeichnet, daß das innere Ende (14') der den Dosierkanal (16) umgebenden Wandung (14) zum Kanal (18) hin eingezogen ist.

8. Dosiereinrichtung nach einem der Ansprüche 1 bis 7, dadurch gekennzeichnet, daß zwischen der Mündungsöffnung (19) und dem inneren Ende (14') der den Dosierkanal (16) umgebenden Wandung (14) in dieser Belüftungsöffnungen (22) vorgesehen sind.

9. Dosiereinrichtung nach einem der Ansprüche 1 bis 8, gekennzeichnet durch mehrere am Umfang des Dosierkanals (16) verteilte, seinem äußeren Ende benachbarte Öffnungen (17).

## Revendications

1. Appareil doseur tubulaire destiné à débiter des quantités de fluide de volumes égaux prélevées dans des récipients de liquide (11') qui sont munis d'une ouverture de sortie dans laquelle le dispositif doseur peut être inséré, de sorte que l'ouverture de sortie est fermée par le dispositif doseur formant joint étanche contre la paroi du récipient, ce dispositif comprenant un canal d'écoulement (13) qui s'étend dans son volume intérieur, en direction axiale, et s'ouvre vers l'extrémité qui est extérieure par rapport au récipient de liquide (1, 1") et un canal doseur (1, 6) qui s'étend dans son volume intérieur, dans la direction axiale, et est fermé vers l'extrémité extérieure, ces canaux étant séparés l'un de l'autre par une cloison (14), qui se termine a une certaine distance de la paroi de fond (10) et qui ferme l'extrémité intérieure du dispositif doseur, de sorte qu'il se forme entre le fond et l'extrémité de la cloison une chambre collectrice (12) qui fait communiquer le canal doseur (16), et le canal d'écoulement (13), et dont le volume est au moins égal au volume à doser, le canal doseur (16), étant en communication avec le volume intérieur du récipient par deux ouvertures (17, 19), disposées à un écartement axial qui correspond au volume à doser, et une chambre réceptrice, dont le volume est au moins égal au volume de la moitié du liquide libre maximum qui peut se présenter, étant formée dans le canal doseur (16), entre l'ouverture qui est la plus éloignée de son extrémité extérieure et l'extrémité de la cloison, caractérisé en ce que l'ouverture qui est la plus éloignée de l'extrémité extérieure est formée par l'ouverture de débouché (19) d'un canal (18) qui traverse la paroi de fond (10) et pénètre dans le canal doseur (16).

2. Dispositif doseur selon la revendication 1, caractérisé en ce que la paroi (11) du canal (18) est d'une seule pièce avec la paroi de fond (10).

3. Dispositif doseur selon la revendication 1 ou 2, caractérisé en ce que l'ouverture de débouché (19) est disposée coaxialement à l'axe longitudinal du canal doseur (16).

4. Dispositif doseur selon l'une des revendications 1 à 3, caractérisé en ce que le canal (18) se rétrécit vers l'ouverture de débouché (19).

5. Dispositif doseur selon l'une des revendications 1 à 4, caractérisé en ce que l'ouverture d'entrée (20) du canal (18), qui est à l'opposé de l'ouverture de débouché (19), possède un diamètre qui représente de la moitié à un cinquième, de préférence du tiers au quart du diamètre de la région du canal (18) qui fait suite à l'ouverture d'entrée (20).

6. Dispositif doseur selon la revendication 5, caractérisé en ce que la surface de la région de paroi (21) présente l'ouverture d'entrée (20) qui se trouve à l'extérieur du canal (18) est située dans le même plan que la surface de la paroi de fond (20) qui est à l'opposé de l'ouverture de débouché (19) ou est située à une plus grande distance de l'ouverture de débouché (19) qui cette surface de la paroi de fond (10).

7. Dispositif doseur selon l'une des revendications 1 à 6, caractérisé en ce que l'extrémité intérieure (14') de la paroi (14) qui entoure le canal doseur (16) est resserrée vers le canal (18).

8. Dispositif doseur selon l'une des revendications 1 à 7, caractérisé en ce que, entre l'ouverture de débouché (19) et l'extrémité intérieure (14') de la paroi (14) qui entoure le canal doseur (16), des ouvertures d'aération (22) sont ménagées dans cette paroi.

9. Dispositif doseur selon l'une des revendications 1 à 8, caractérisé par plusieurs ouvertures (17) réparties sur la circonférence du canal doseur (16) et voisines de son extrémité extérieure.

## Claims

1. Tubular dosage device for the delivery of liquid quantities of equal volume from liquid containers (1, 1'), which are provided with a delivery opening into which the dosage device can be inserted, so that the delivery opening is closed off with respect to the dosage device sealed against the container wall, with a pouring passage (13) which extends axially in the interior thereof and which is open at its outer end relatively to the liquid container (1, 1') and a dosage or measuring passage (16) which extends axially in the interior thereof and is closed towards the outer end, which passages are separated from one another by a partition (14), which ends at a distance from the bottom wall (10) which seals the inner end of the dosage device, so that a collecting chamber (12) connecting the measuring passage (16) and the pouring passage (13) is formed between the bottom wall and the end of the partition, the volume of said chamber being at least equal to the volume which is to be measured out, the measuring passage (16) being connected to the interior of the container by way of two openings (17, 19) arranged with an axial spacing corresponding to the volume which is to be dispensed and a collecting chamber is formed in the measuring passage (16) between that opening (12) which is furthest from its outer end and the end of the partition, the volume of said chamber being at least equal to the volume of half of the free liquid occurring as a maximum, characterised in that that opening which is furthest from the open end is formed by the mouth opening (19) of a passage (18) which extends through the bottom wall (10) into the measuring passage (16).

2. Dosage device according to claim 1, characterised in that the wall (11) of the passage (18) is formed in one piece with the bottom wall (10).

3. Dosage device according to claim 1 or 2, characterised in that the mouth opening (19) is arranged coaxially of the longitudinal axis of the measuring passage (16).

4. Dosage device according to one of claims 1 to 3, characterised in that the passage (18) is tapered towards the mouth opening (19).

5. Dosage device according to one of claims 1 to 4, characterised in that the inlet opening (20) of the passage (18) which is opposite to the mouth opening (19) has a diameter which is 1/2 to 1/5th, advantageously 1/3 to 1/4th, of the diameter of that region of the passage (18) which is connected to the inlet opening (20).

6. Dosage device according to claim 5, characterised in that the surface of the wall region (21) comprising the inlet opening (20) and situated outside the passage (18) lies in the same plane as that surface of the base wall (10) facing away from the mouth opening (19) or is spaced further from the mouth opening (19) than this surface of the base wall (10).

7. Dosage device according to one of claims 1 to 4, characterised in that the inner end (14') of the wall (14) enclosing the measuring passage (16) is reduced towards the passage (18).

8. Dosage device according to one of claims 1 to 7, characterised in that, between the mouth opening (19) and the inner end (14') of the wall (14) surrounding the measuring passage (16), aeration openings (22) are provided in the said wall.

9. Dosage device according to one of claims 1 to 8, characterised by a plurality of openings (17) which are distributed on the circumference of the measuring passage (16), adjacent its outer end.

FIG.1

FIG.3

FIG.2

# FIG.4